# EUROPEAN PATENT SPECIFICATION

(11) **EP 2 574 164 B1**
(45) Date of publication and mention of the grant of the patent: **14.02.2018**
(21) Application number: 11723772.7
(22) Date of filing: 08.04.2011
(51) Int. Cl.: A61C 1/08, A61C 1/18, A61C 17/00, A61C 17/16

(54) **DENTAL HYGIENE SYSTEM, AND METHOD OF OPERATING A DENTAL HYGIENE SYSTEM**
ZAHNHYGIENESYSTEM UND VERFAHREN FÜR DEN BETRIEB EINES ZAHNHYGIENESYSTEMS
SYSTÈME D'HYGIÈNE DENTAIRE, ET MÉTHODE DE COMMANDE D'UN SYSTÈME D'HYGIÈNE DENTAIRE

(30) Priority: 09.04.2010 US 322402 P
(43) Date of publication of application: 03.04.2013
(73) Proprietor: DENTSPLY SIRONA Inc., York, PA 17401-2991 (US)
(72) Inventor: CHRONISTER, Ben, Parkesburg, PA 19365 (US); KILE, Jeremy, Wrightsville, PA 17368 (US)
(74) Representative: Hartz, Nikolai
(86) International application number: PCT/US2011/031675
(87) International publication number: WO 2011/127342

(56) References cited:
- WO-A1-2011/041636
- DE-B3-102008 023 458
- GB-A- 2 118 836
- US-A1- 2002 127 512
- US-A1- 2010 196 845

## Description

### FIELD OF THE DISCLOSURE

The present disclosure is directed to dental devices for cleaning, polishing, and treating teeth. More particularly, the disclosure relates to adapters for connecting a dental device and a dental handpiece. Such a device is disclosed in GB2118836.

### BACKGROUND OF THE DISCLOSURE

Generally, dental hygiene devices are exposed to undesirable substances and contaminants including, but not limited to, plaque, blood, saliva, and/or paste. Sterilizing and/or disinfecting dental hygiene devices can result in down-time for clinicians.

To reduce or eliminate down-time, modular dental hygiene devices can be utilized. Modular dental hygiene devices can include a dental prophylaxis angle (DPA) capable of being connected to a dental handpiece. The DPA can be disassembled and discarded or sterilized while the dental handpiece is more frequently used. Since there is no industry standard, these dental handpieces have interfaces that are compatible with the interfaces of certain DPAs. However, due to the various DPA designs and handpiece designs, a dental handpiece can include a geometry incompatible with the geometry of another DPA. This can result in the clinician being unable to utilize DPAs having incompatible geometries with certain handpieces that provide other benefits such as improved stability and/or other improvements. Furthermore, using multiple dental devices including incompatible geometry can require the clinician to use multiple handpieces.

Therefore, what is needed are a dental hygiene system and method of operating a dental hygiene system having a dental device adapter system for connecting dental handpieces and dental devices.

### SUMMARY OF THE DISCLOSURE

According to one aspect of the present disclosure, a dental device adapter system according to claim 1 is defined.

According to yet another aspect of the present disclosure, a method of operating a dental hygiene system having a dental prophylaxis angle, a dental handpiece, according to claim 14 is defined.

Further aspects of the method and system are disclosed herein. The features as discussed above, as well as other features and advantages of the present disclosure will be appreciated and understood by those skilled in the art from the following detailed description and drawings.

### BRIEF DESCRIPTION OF THE DRAWINGS

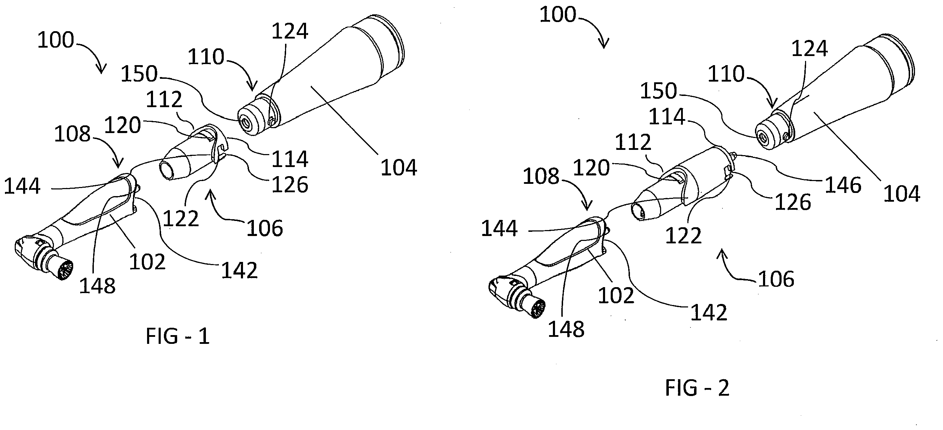

FIGS. 1-9 show exemplary embodiments of a dental hygiene system having a dental device adapter system, wherein figures 1 to 5 do not disclose the invention as claimed.

Wherever possible, the same reference numbers will be used throughout the drawings to represent the same parts.

### DETAILED DESCRIPTION OF THE DISCLOSURE

The present disclosure now will be described more fully hereinafter with reference to the accompanying drawings, in which an exemplary embodiment of the disclosure is shown. This disclosure may, however, be embodied in many different forms and should not be construed as limited to the embodiments set forth herein.

Provided is a dental hygiene system and method of operating a dental hygiene system having a dental device adapter system for connecting dental handpieces and dental devices. In exemplary embodiments of the disclosure, the dental device adapter system permits clinicians to use multiple dental devices with a single dental handpiece, multiple dental handpieces with a single dental device, dental devices incompatible with dental handpieces, and/or increased modularity. For example, exemplary embodiments of the present disclosure permit clinicians to use multiple styles of a dental prophylaxis angle (DPA) with a single dental handpiece. Also, exemplary embodiments of the present disclosure permit clinicians to use multiple styles of the handpiece with a single DPA.

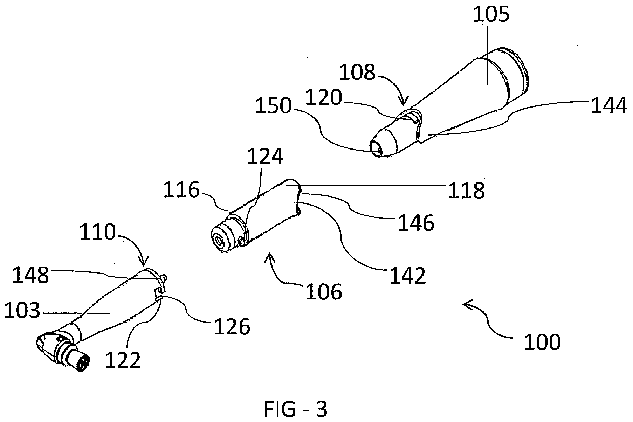

FIGS. 1-9 show alternate views of an exemplary embodiment of dental hygiene systems 100. Each system 100 includes a dental device (for example, a DPA, a dental drill, or other suitable dental device), a dental handpiece, and a dental device adapter system 106. In one embodiment, the dental device may be DPA 102, as disclosed in U.S. Patent Application No. 12/004,155 (shown in FIG. 1). In another embodiment, the dental device may be DPA 103, as shown in FIG. 3. In one embodiment, the dental handpiece may be dental handpiece 104, as disclosed in U.S. Patent Application No. 12/004,155. In another embodiment, the dental handpiece may be dental handpiece 105, as shown in FIG. 3. Dental device adapter system 106 permits use of DPA 102 or DPA 103 to be used with dental handpiece 104 or dental handpiece 105. As will be appreciated, engagement features (for example, male parts and female parts) may be reversed in any suitable manner. For example, although the dental handpiece are shown and described as including a female engagement feature, a male engagement feature may be used., Thus, the DPA(s), the dental handpiece(s), the adapter(s), or other suitable portions of dental hygiene system 100 may be engaged by any suitable engagement features.

Dental device adapter system 106 comprises two or more adapters capable of connecting the DPA to the dental handpiece. Dental device adapter system 106 can be of any suitable material, for example polymeric, metal, or composite. Dental device adapter system 106 may include any suitable features for operably connecting the dental handpiece to the DPA. As shown in FIGS. 2-5, which do not disclose embodiments falling within the scope of the claims, the dental device adapter system 106 includes a drive shaft 146 configured to engage a DPA drive shaft 148. Additionally as shown in FIGS. 2-5, dental device adapter system 106 includes a drive shaft 146 configured to engage a handpiece drive shaft 150.

In one embodiment, dental device adapter system 106 may be disassembled from the dental handpiece and/or from the DPA and autoclaved. In another embodiment, dental device adapter system 106 may include disposable parts or be entirely disposable. Dental device adapter system 106 includes a first portion 112 configured to detachably engage the DPA and a second portion 114 configured to detachably engage the dental handpiece 104. Dental device adapter system 106 can be attached to either the dental handpiece 104 or the DPA first.

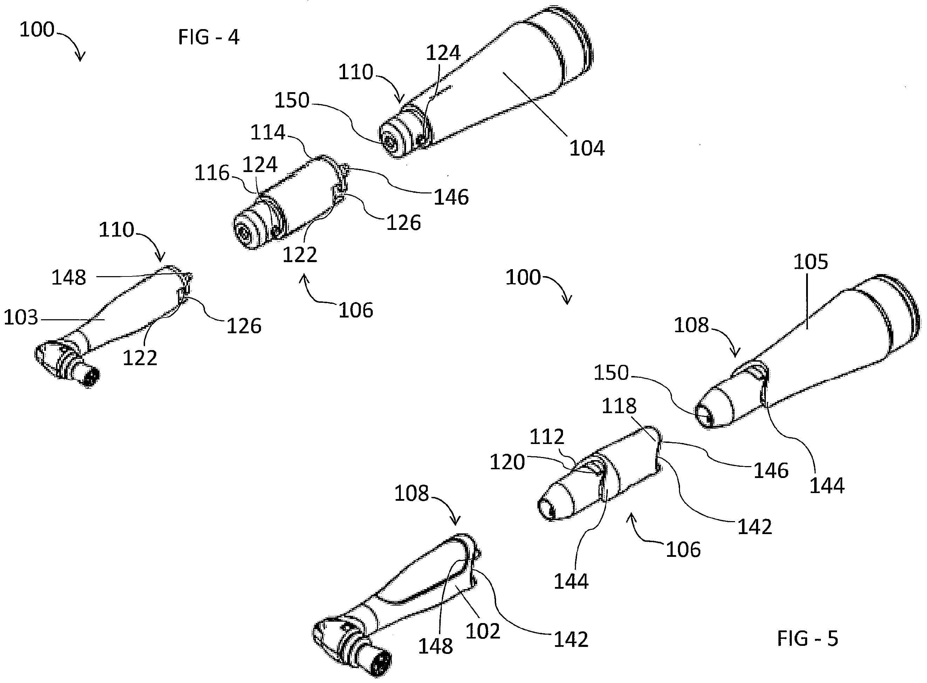

The dental handpiece and/or the DPA can include alignment features for substantially permanent engagement or detachable engagement with one another (see FIGS. 4-5). Alignment features can be included on an exterior portion of the dental handpiece and/or the DPA and/or on an interior portion of the dental handpiece and/or the DPA. For example, the alignment features may include two or more recesses 142 corresponding to protrusions 144 (see FIG. 5) or a feature 124 corresponding to a notch interface 122 and a notch 126 (see FIG. 4). Alternatively, the dental handpiece and the DPA may be incompatible (see FIGS. 1-3). For example, the dental handpiece may include a first geometry 108 and the DPA may include a second geometry 110, the first geometry being incompatible with the second geometry. Likewise, the dental handpiece and the DPA may include alignment features that are incompatible.

Dental device adapter system 106 may connect any suitable DPA to any suitable dental handpiece despite the DPA and the dental handpiece being incompatible. Referring to FIGS. 1-2, in one embodiment, dental device adapter system 106 can connect DPA 102 having a first geometry 108 (for example, a swoop-like shape) or interface with dental handpiece 104 having a second geometry 110 (for example, a ring-like shape) or interface despite DPA 102 and dental handpiece 104 being incompatible. In the embodiment, dental device adapter system 106 includes first portion 112 configured to detachably engage DPA 102 and second portion 114 configured to detachably engage dental handpiece 104. First portion 112 includes protrusions 144 for engaging recesses 142 of DPA 102. Second portion 114 includes notch interface 122 and notch 126 for engaging feature 124 of dental handpiece 104. According to the invention, dental device adapter system 106 is formed by two separate adapters. Any suitable combination of separate adapters may be used to form dental device adapter system 106. For example, one adapter may be a sheath and the other adapter may be a shaft extender having a tube on one end for engaging DPA drive shaft 148 and a shaft on the other end for engaging the dental handpiece. Additionally or alternatively, the shaft in the DPA drive shaft 148 may be configured to extend all the way through the adapter(s).

Referring to FIG. 3, in another embodiment, dental device adapter system 106 can connect DPA 103 having second geometry 110 (the ring-like shape) with dental handpiece 105 having first geometry 108 (the swoop-like shape) despite DPA 103 and dental handpiece 105 being incompatible. In the embodiment, dental device adapter system 106 includes first portion 116 configured to detachably engage DPA 103 and second portion 118 configured to detachably engage dental handpiece 105. First portion 116 includes feature 124 for engaging notch interface 122 and notch 126 of DPA 103. Second portion 118 includes recesses 142 for engaging protrusions 144 of dental handpiece 105.

Dental device adapter system 106 may connect compatible DPAs and dental handpieces, thereby extending the length of system 100. Referring to FIG. 4, in another embodiment, dental device adapter system 106 can connect DPA 103 having the second geometry 110 (for example, the ring-like shape) with dental handpiece 104 having a second geometry 110 (for example, a ring-like shape). In the embodiment, dental device adapter system 106 includes first portion 116 configured to detachably engage DPA 103 and second portion 114 configured to detachably engage dental handpiece 104. First portion 116 includes feature 124 for engaging notch interface 122 and notch 126 of DPA 103. Second portion 114 includes notch interface 122 and notch 126 for engaging feature 124 of dental handpiece 104.

Referring to FIG. 5, in one embodiment, dental device adapter system 106 can connect DPA 102 having first geometry 108 (the swoop-like shape) with dental handpiece 105 having first geometry 108 (the swoop-like shape). In the embodiment, dental device adapter system 106 includes first portion 112 configured to detachably engage DPA 102 and second portion 118 configured to detachably engage dental handpiece 105. First portion 112 includes protrusions 144 for engaging recesses 142 of DPA 102. Second portion 118 includes recesses 142 for engaging protrusions 144 of dental handpiece 105.

Dental device adapter system 106 may include any suitable securing mechanism for releasably securing dental device adapter system 106 to the DPA. For example, dental device adapter system 106 may include one or more tabs 120 forming a friction or interference fit between dental device adapter system 106 and DPA 102 (see FIGS. 1-2, and 4). Alternatively, dental device adapter system 106 may include notch interface 122 or bayonet style interface for securing dental device adapter system 106 to DPA 103 (see FIGS. 3 and 5). For example, interface 122 may be configured to engage feature 124 on DPA 103 by notch 126 being inserted into feature 124 and rotated. In one embodiment, the interface may be engaged without rotation of the notch in the feature. Other suitable connection methods and/or connection mechanisms may be used as the securing mechanism. For example, pads, ribs portions, threads, springs, buttons, temporary adhesive, and/or combinations thereof may secure dental device adapter system 106 to the DPA.

Dental device adapter system 106 may include any suitable securing mechanism for releasably securing dental device adapter system 106 to the dental handpiece. For example, dental device adapter system 106 may be engaged by tab(s) 120 forming a friction or interference fit between dental device adapter system 106 and dental handpiece 105 (see FIGS. 3 and 5). Alternatively, dental device adapter system 106 may include feature 124 for engaging notch interface 122 or bayonet style interface of DPA 103 (see FIGS. 1-4). Other suitable connection methods and/or connection mechanisms may be used as the second securing mechanism. For example, pads, ribs portions, threads, springs, buttons, temporary adhesive, and/or combinations thereof may secure dental device adapter system 106 to the dental handpiece.

Dental device adapter system 106 may include additional mechanisms for permanently or detachably securing dental device adapter system 106 to the DPA, securing dental device adapter system 106 to the dental handpiece, securing portions of dental device adapter system 106, securing dental device adapter system 106 to any other suitable apparatus, and/or securing combinations thereof. The additional securing mechanism may be any suitable alignment mechanism, geometric configuration, and/or other suitable securing mechanism. For example, the additional securing mechanism may be based upon adhesive, friction, threading, magnets, snap features, canted coil spring and matching groove, collets, dovetail interfacing, flaring, other suitable securing techniques, and/or their combination. In one embodiment, a cam (not shown) may be actuated by depressing a spring-loaded button. The cam can rotate thereby releasing dental device adapter system 106 from the DPA, the dental handpiece, and/or another suitable apparatus. Additionally or alternatively, the cam can rotate thereby separating the portions of the dental device adapter system 106.

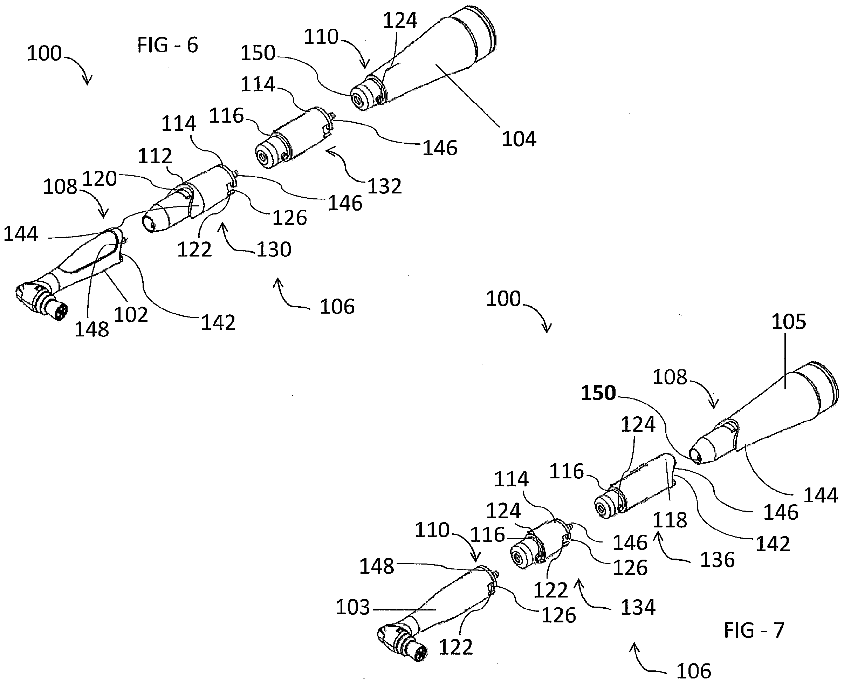

Referring to FIGS. 6-9, according to the invention, dental device adapter system 106 includes at least two adapters. Referring to FIG. 6, a first adapter 130 is configured to engage DPA 102 having first geometry 108 (the swoop-like shape). A second adapter 132 is configured to engage dental handpiece 104 having second geometry 110 (the ring-like shape). First adapter 130 and second adapter 132 may be permanently or releasably secured to one another by any suitable mechanism, thereby operably connecting DPA 102 to dental handpiece 104. Referring to FIG. 7, a first adapter 134 is configured to engage DPA 103 having second geometry 110 (the ring-like shape). A second adapter 136 is configured to engage dental handpiece 105 having first geometry 108 (the swoop-like shape). First adapter 134 and second adapter 136 may be permanently or releasably secured to one another by any suitable mechanism at an interface, thereby operably connecting DPA 103 to dental handpiece 105. As will be appreciated, a first adapter and a second adapter may likewise operably connect DPA 102 to dental handpiece 105 or DPA 103 to handpiece 104.

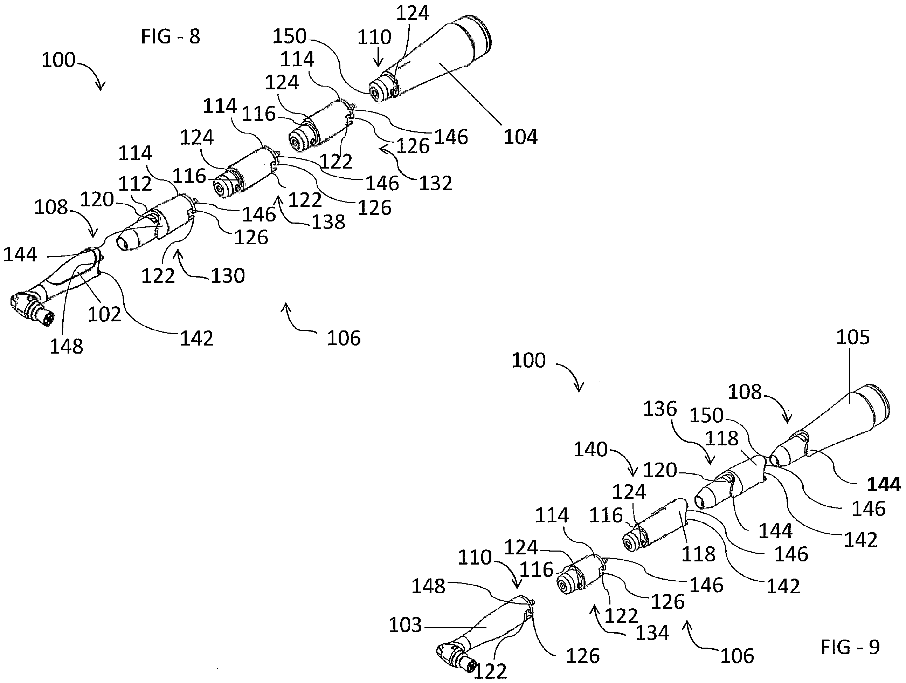

Referring to FIGS. 8 and 9, in one embodiment, dental device adapter system 106 includes at least three adapters. Referring to FIG. 8, dental device adapter system 106 may include first adapter 130 configured to engage DPA 102 having first geometry 108, second adapter 132 configured to engage dental handpiece 104 having second geometry 110, and a third adapter 138 configured to engage first adapter 130 and second adapter 132. Third adapter 138 may be secured permanently or releasably to first adapter 130 and/or second adapter 132, thereby operably connecting DPA 102 to dental handpiece 104. Referring to FIG. 9, dental device adapter system 106 may include first adapter 134 configured to engage DPA 103 having second geometry 110, second adapter 136 configured to engage dental handpiece 105 having first geometry 108, and a third adapter 140 configured to engage first adapter 134 and second adapter 136. Third adapter 140 may be secured permanently or releasably to first adapter 134 and/or second adapter 136, thereby operably connecting DPA 103 to dental handpiece 105. As will be appreciated, a third adapter may likewise engage the first adapters 130, 134 and the second adapters 132, 136 that operably connect DPA 102 to dental handpiece 105 or DPA 103 to handpiece 104.

Furthermore any suitable number of adapters may be included in dental device adapter system 106. For example, four, five, or more adapters may be included. In embodiments where adapters provide specific features, more adapters may be desirable. However, using more adapters requires more material cost and can increase risk of mechanical failure.

Other features may be provided by dental device adapter system 106. For example, dental device adapter system 106 may extend dental hygiene system 100 in a substantially axial direction. Alternatively, dental device adapter system 106 may extend dental hygiene system 100 in a direction other than a substantially axial direction For example, dental device adapter system 106 may extend dental hygiene system 100 in an angled orientation.

Dental device adapter system 106 may permit flexible manipulation of dental hygiene system 100 by dental device adapter system 106 including a flexible/elastomeric material and a flexible drive shaft.

## Claims

1. A dental hygiene system (100), comprising:
a dental prophylaxis angle (102);
a dental handpiece (104, 105) including a handpiece drive shaft (150); and
a dental device adapter system (106) including a drive shaft (146) configured to engage handpiece drive shaft (150), comprising:
(i) a first adapter (130) configured to engage the dental prophylaxis angle (102) having a first geometry (108) and a first rotatable component; and
(ii) a second adapter (132) configured to engage the dental handpiece (104, 105) having a second geometry (110) and a second rotatable component; and
wherein the first adapter (130) being engaged with the dental prophylaxis angle (102) and the second adapter (132) being engaged with the dental handpiece (104, 105) permits rotation of the second rotatable component to rotate the first rotatable component when the first adapter (130) and the second adapter (132) are secured to one another, thereby operably connecting dental prophylaxis angle (102) to dental handpiece (104).

2. The dental hygiene system (100) of claim 1, wherein the first adapter (130) is configured to detachably engage the dental prophylaxis angle (102).

3. The dental hygiene system (100) of claim 1, wherein the second adapter (132) is configured to detachably engage the dental handpiece (104, 105).

4. The dental hygiene system (100) of claim 1, further comprising a third adapter (138) configured to engage the first adapter (130) and the second adapter (132), wherein third adapter (138) being engaged with the first adapter (130) and the second adapter (132) permits rotation of the second rotatable component to rotate the first rotatable component.

5. The dental device adapter system of claim 1, wherein the dental device adapter system (106) extends the dental hygiene system (100) in a substantially axial direction.

6. The dental device adapter system of claim 1, wherein the dental device adapter system (106) extends the dental hygiene system (100) in a direction other than a substantially axial direction.

7. The dental hygiene system (100) of claim 1, wherein the dental device adapter system includes an elastomeric material permitting flexible manipulation of the dental hygiene system (100).

8. The dental hygiene system (100) of claim 1, wherein the rotatable component is a flexible drive shaft.

9. The dental hygiene system (100) of claim 1, wherein the first geometry includes at least two separate recesses.

10. The dental hygiene system (100) of claim 1, wherein the second geometry includes at least two separate recesses.

11. The dental hygiene system (100) of claim 1, wherein the first geometry includes a notch corresponding to a notch interface.

12. The dental hygiene system (100) of claim 1, wherein the second geometry includes a notch interface corresponding to a notch.

13. The dental hygiene system (100) of claim 1, wherein the first geometry is incompatible with the second geometry.

14. A method of operating a dental hygiene system (100) having a dental prophylaxis angle (102), a dental handpiece (104, 105) including a handpiece drive shaft (150), and a dental device adapter system (106), the method comprising:
(a) providing the dental device adapter system (106) including a drive shaft (146) configured to engage handpiece drive shaft (150), the dental device adapter system (106) comprising:
(i) a first adapter (130) configured to engage the dental prophylaxis angle (102) having a first geometry and a first rotatable component; and
(ii) a second adapter (132) configured to engage the dental handpiece (104, 105) having a second geometry and a second rotatable component;
wherein the first adapter (130) is engaged with the dental prophylaxis angle (102) and the second adapter (132) is engaged with the dental handpiece (104, 105) and the first adapter (130) and the second adapter (132) are secured to one another, thereby operably connecting dental prophylaxis angle (102) to dental handpiece (104);
and
(b) rotating the second rotatable component thereby rotating the first rotatable component.

## Patentansprüche

1. Zahnhygienesystem (100), Folgendes umfassend:
ein Zahnprophylaxe-Winkelstück (102);
ein zahnärztliches Handstück (104, 105), das eine Handstückantriebswelle (150) beinhaltet; und
ein Dentalvorrichtungs-Adaptersystem (106), das eine Antriebswelle (146) beinhaltet, die so konfiguriert ist, dass sie mit der Handstückantriebswelle (150) in Eingriff kommt, Folgendes umfassend:
(i) einen ersten Adapter (130), der so konfiguriert ist, dass er mit dem Zahnprophylaxe-Winkelstück (102), das eine erste Geometrie (108) und eine erste drehbare Komponente aufweist, in Eingriff kommt; und
(ii) einen zweiten Adapter (132), der so konfiguriert ist, dass er mit dem zahnärztlichen Handstück (104,105), das eine zweite Geometrie (110) und eine zweite drehbare Komponente aufweist, in Eingriff kommt; und
worin der erste Adapter (130), der mit dem Zahnprophylaxe-Winkelstück (102) in Eingriff steht, und der zweite Adapter (132), der mit dem zahnärztlichen Handstück (104, 105) in Eingriff steht, die Drehung der zweiten drehbaren Komponente ermöglicht, um die erste drehbare Komponente zu drehen, wenn der erste Adapter (130) und der zweite Adapter (132) aneinander befestigt sind, wodurch das Zahnprophylaxe-Winkelstück (102) mit dem zahnärztlichen Handstück (104) wirksam verbunden wird.

2. Das Zahnhygienesystem (100) nach Anspruch 1, worin der erste Adapter (130) so konfiguriert ist, dass er mit dem Zahnprophylaxe-Winkelstück (102) lösbar in Eingriff kommt.

3. Das Zahnhygienesystem (100) nach Anspruch 1, worin der zweite Adapter (132) so konfiguriert ist, dass er mit dem zahnärztlichen Handstück (104, 105) lösbar in Eingriff kommt.

4. Das Zahnhygienesystem (100) nach Anspruch 1, des Weiteren einen dritten Adapter (138) umfassend, der so konfiguriert ist, dass er mit dem ersten Adapter (130) und dem zweiten Adapter (132) in Eingriff kommt, worin der dritte Adapter (138), der mit dem ersten Adapter (130) und dem zweiten Adapter (132) in Eingriff steht, die Drehung der zweiten drehbaren Komponente ermöglicht, um die erste drehbare Komponente zu drehen.

5. Das Dentalvorrichtungs-Adaptersystem nach Anspruch 1, worin das Dentalvorrichtungs-Adaptersystem (106) das Zahnhygienesystem (100) in eine im Wesentlichen axiale Richtung erweitert.

6. Das Dentalvorrichtungs-Adaptersystem nach Anspruch 1, worin das Dentalvorrichtungs-Adaptersystem (106) das Zahnhygienesystem (100) in eine andere Richtung als eine im Wesentlichen axiale Richtung erweitert.

7. Das Zahnhygienesystem (100) nach Anspruch 1, worin das Dentalvorrichtungs-Adaptersystem ein Elastomermaterial beinhaltet, das eine flexible Handhabung des Zahnhygienesystems (100) ermöglicht.

8. Das Zahnhygienesystem (100) nach Anspruch 1, worin die drehbare Komponente eine flexible Antriebswelle ist.

9. Das Zahnhygienesystem (100) nach Anspruch 1, worin die erste Geometrie mindestens zwei separate Aussparungen beinhaltet.

10. Das Zahnhygienesystem (100) nach Anspruch 1, worin die zweite Geometrie mindestens zwei separate Aussparungen beinhaltet.

11. Das Zahnhygienesystem (100) nach Anspruch 1, worin die erste Geometrie eine Kerbe beinhaltet, die einer Kerbenoberfläche entspricht.

12. Das Zahnhygienesystem (100) nach Anspruch 1, worin die zweite Geometrie eine Kerbenoberfläche beinhaltet, die einer Kerbe entspricht.

13. Das Zahnhygienesystem (100) nach Anspruch 1, worin die erste Geometrie nicht mit der zweiten Geometrie kompatibel ist.

14. Verfahren zum Betreiben eines Zahnhygienesystems (100), das ein Zahnprophylaxe-Winkelstück (102), ein zahnärztliches Handstück (104, 105), das eine HandstückAntriebswelle (150) beinhaltet, und ein Dentalvorrichtungs-Adaptersystem (106) aufweist, das Verfahren Folgendes umfassend:
(a) Bereitstellen des Dentalvorrichtungs-Adaptersystems (106), das eine Antriebswelle (146) beinhaltet, die so konfiguriert ist, dass sie die HandstückAntriebswelle (150) in Eingriff bringt, das Dentalvorrichtungs-Adaptersystem (106) Folgendes umfassend:
(i) einen ersten Adapter (130), der so konfiguriert ist, dass er das Zahnprophylaxe-Winkelstück (102), das eine erste Geometrie und eine erste drehbare Komponente aufweist, in Eingriff bringt; und
(ii) einen zweiten Adapter (132), der so konfiguriert ist, dass er das zahnärztliche Handstück (104, 105), das eine zweite Geometrie und eine zweite drehbare Komponente aufweist, in Eingriff bringt;
worin der erste Adapter (130) mit dem Zahnprophylaxe-Winkelstück (102) in Engriff steht und der zweite Adapter (132) mit dem zahnärztlichen Handstück (104, 105) in Eingriff steht und der erste Adapter (130) und der zweite Adapter (132) aneinander befestigt sind, wodurch das Zahnprophylaxe-Winkelstück (102) wirksam mit dem zahnärztlichen Handstück (104) verbunden wird;
und
(b) Drehen der zweiten drehbaren Komponente, wodurch die erste drehbare Komponente gedreht wird.

## Revendications

1. Système d'hygiène dentaire (100) comprenant :
un angle de prophylaxie dentaire (102) ;
une pièce à main dentaire (104, 105) incluant un arbre d'entraînement de pièce à main (150) ; et
un système d'adaptateur de dispositif dentaire (106) incluant un arbre d'entraînement (146) configuré pour venir en prise avec l'arbre d'entraînement de pièce à main (150), comprenant :
(i) un premier adaptateur (130) configuré pour venir en prise avec l'angle de prophylaxie dentaire (102) ayant une première géométrie (108) et un premier composant rotatif ; et
(ii) un second adaptateur (132) configuré pour venir en prise avec la pièce à main dentaire (104, 105) ayant une seconde géométrie (110) et un second composant rotatif ; et
dans lequel le fait que le premier adaptateur (130) vient en prise avec l'angle de prophylaxie dentaire (102) et le second adaptateur (132) vient en prise avec la pièce à main dentaire (104, 105) permet la rotation du second composant rotatif pour faire tourner le premier composant rotatif lorsque le premier adaptateur (130) et le second adaptateur (132) sont solidaires entre eux, ce qui permet de relier de manière fonctionnelle l'angle de prophylaxie dentaire (102) à la pièce à main dentaire (104).

2. Système d'hygiène dentaire (100) selon la revendication 1, dans lequel le premier adaptateur (130) est configuré pour venir en prise de manière détachable avec l'angle de prophylaxie dentaire (102).

3. Système d'hygiène dentaire (100) selon la revendication 1, dans lequel le second adaptateur (132) est configuré pour venir en prise de manière détachable avec la pièce à main dentaire (104, 105).

4. Système d'hygiène dentaire (100) selon la revendication 1, comprenant en outre un troisième adaptateur (138) configuré pour venir en prise avec le premier adaptateur (130) et le second adaptateur (132), où le troisième adaptateur (138) étant en prise avec le premier adaptateur (130) et le second adaptateur (132) permet la rotation du second composant rotatif pour faire tourner le premier composant rotatif.

5. Système d'adaptateur de dispositif dentaire selon la revendication 1, dans lequel le système d'adaptateur de dispositif dentaire (106) déploie le système d'hygiène dentaire (100) dans une direction sensiblement axiale.

6. Système d'adaptateur de dispositif dentaire selon la revendication 1, dans lequel le système d'adaptateur de dispositif dentaire (106) déploie le système d'hygiène dentaire (100) dans une direction autre qu'une direction sensiblement axiale.

7. Système d'hygiène dentaire (100) selon la revendication 1, dans lequel le système adaptateur de dispositif dentaire comprend un matériau élastomère permettant une manipulation flexible du système d'hygiène dentaire (100).

8. Système d'hygiène dentaire (100) selon la revendication 1, dans lequel le composant rotatif est un arbre d'entraînement flexible.

9. Système d'hygiène dentaire (100) selon la revendication 1, dans lequel la première géométrie inclut au moins deux renfoncements séparés.

10. Système d'hygiène dentaire (100) selon la revendication 1, dans lequel la seconde géométrie inclut au moins deux renfoncements séparés.

11. Système d'hygiène dentaire (100) selon la revendication 1, dans lequel la première géométrie inclut une encoche correspondant à une interface d'encoche.

12. Système d'hygiène dentaire (100) selon la revendication 1, dans lequel la seconde géométrie inclut une interface d'encoche correspondant à une encoche.

13. Système d'hygiène dentaire (100) selon la revendication 1, dans lequel la première géométrie est incompatible avec la seconde géométrie.

14. Procédé de fonctionnement d'un système d'hygiène dentaire (100) ayant un angle de prophylaxie dentaire (102), une pièce à main dentaire (104, 105) incluant un arbre d'entraînement de pièce à main (150) et un système d'adaptateur de dispositif dentaire (106), le procédé comprenant :
(a) la fourniture du système d'adaptateur de dispositif dentaire (106) incluant un arbre d'entraînement (146) configuré pour engager l'arbre d'entraînement de pièce à main (150), le système d'adaptateur de dispositif dentaire (106) comprenant :
(i) un premier adaptateur (130) configuré pour venir en prise avec l'angle de prophylaxie dentaire (102) ayant une première géométrie et un premier composant rotatif ; et
(ii) un second adaptateur (132) configuré pour s'engager dans la pièce à main dentaire (104, 105) ayant une seconde géométrie et un second composant rotatif ;
où le premier adaptateur (130) est engagé avec l'angle de prophylaxie dentaire (102) et le second adaptateur (132) vient en prise avec la pièce à main dentaire (104, 105), et le premier adaptateur (130) et le second adaptateur (132) sont solidaires entre eux, reliant ainsi de manière fonctionnelle l'angle de prophylaxie dentaire (102) à la pièce à main dentaire (104) ;
et
(b) la rotation du second composant rotatif fait ainsi tourner le premier composant rotatif.
